# EUROPÄISCHE PATENTANMELDUNG

(11) **EP 2 110 584 A2**
(43) Veröffentlichungstag der Anmeldung: **21.10.2009**
(21) Anmeldenummer: 09157480.6
(22) Anmeldetag: 07.04.2009
(51) Int. Cl.: F16J 15/54, F15B 15/12

(54) **Scheibendichtung, insbesondere für einen Schwenkmotor**

(30) Priorität: 14.04.2008 DE 102008018999
(71) Anmelder: ZF Friedrichshafen AG, 88038 Friedrichshafen (DE)
(72) Erfinder: Brothag, Josef, 97241, Bergtheim (DE); Böttger, Christian, 96158, Birkach (DE); Schlüter, Andreas, 97422, Schweinfurt (DE); Reuß, Matthias, 97440, Werneck (DE); Wirth, Alfred, 97421, Schweinfurt (DE); Schiffler, Stefan, 97539, Wonfurt (DE)

(57) **Zusammenfassung**

Scheibendichtung, umfassend ein Füllstück (1) mit mindestens einem Schlitzen (5-9), der mindestens einen elastischen Stege (11-15) begrenzt, wobei der elastische Steg (11-15) einen maximalen Federweg ausführen kann, der der Schlitzbreite entspricht, wobei der Schlitz breiter als ein zulässiger Federweg des Stegs (11-15) ausgeführt ist und mindestens ein Anschlag (17) als Wegbegrenzung für den elastischen Steg (11-15) dient.

## Beschreibung

Die Erfindung betrifft eine Scheibendichtung gemäß dem Oberbegriff von Patentanspruch 1.

Aus der EP 1 150 018 A2 ist ein Dichtungselement für einen Schwenkmotor mit einem Dichtungs-Innenteil als Füllstück bekannt, das einen äußeren Gleitrahmen radial vorspannt. Dafür verfügt das Füllstück über ein Schlitzprofil, das durch ein Stanzverfahren erzeugt wird.

Abgesehen von endseitigen Durchgangsbohrungen verlaufen die Schlitze mit einer konstanten Breite, die im Vergleich zu den verbleibenden Stegen relativ schmal dimensioniert sind. Der Deformationsweg der Stege wird durch die Schlitzbreite bestimmt. Das Füllstück wird gewöhnlich aus einem Kunststoff hergestellt, dessen Biegefestigkeit begrenzt ist. Insbesondere bei der Montage können die Stege des Füllstücks stark deformiert und damit belastet werden. Folglich ist die Schlitzbreite zu begrenzen, wobei diese Konstruktionsregel den Werkzeugverschleiß des Stanzwerkzeugs für die Schlitze negativ beeinflusst.

Die Aufgabe der vorliegenden Erfindung besteht darin, ein Füllstück für eine Scheibendichtung dahingehend zu verbessern, so dass einerseits ein überlastungssicheres Füllstück vorliegt und andererseits ein geringer Stanzwerkzeugverschleiß auftritt.

Erfindungsgemäß wird die Aufgabe dadurch gelöst, dass der Schlitz breiter als ein zulässiger Federweg des Stegs ausgeführt ist und mindestens ein Anschlag als Wegbegrenzung für den elastischen Steg dient.

Der große Vorteil der Erfindung besteht darin, dass die Schlitzbreite auf einem sehr großen Bereich von der Größe des zulässigen Federwegs unabhängig ist. Folglich kann die Schlitzbreite werkzeugoptimiert ausgeführt sein.

Bei einer ersten Variante wird der Anschlag von mindestens einem die Schlitzbreite verringernden Vorsprung gebildet.

Um die Standzeit des Stanzwerkzeugs zu verbessern sind die Übergänge des Schlitzes zum Vorsprung ausgerundet.

Bei einer Alternativlösung folgt der Schlitz der Form einer mathematisch stetigen Funktion. So kann die Schnittkante des Schlitzes, z. B. parabelförmig, verlaufen. Hinsichtlich des Stanzwerkzeugbaus hat sich ein trapezförmiger Schlitz als eine gute Kompromisslösung herausgestellt.

Des Weiteren kann vorgesehen sein, dass der Schlitz bis zu einem äußeren Rand verläuft und der Anschlag in einem Abstand nach radial innen versetzt ausgeführt ist. Mit dieser Maßnahme will man eine endseitig spitzzulaufende Stanzwerkzeugschneide vermeiden.

Anhand der folgenden Figurenbeschreibung soll die Erfindung näher erläutert werden.

### Es zeigt:

- Fig. 1: Füllstück einer Scheibendichtung in der Vorderansicht
- Fig. 2 u. 3: Detaildarstellungen aus der Fig. 1

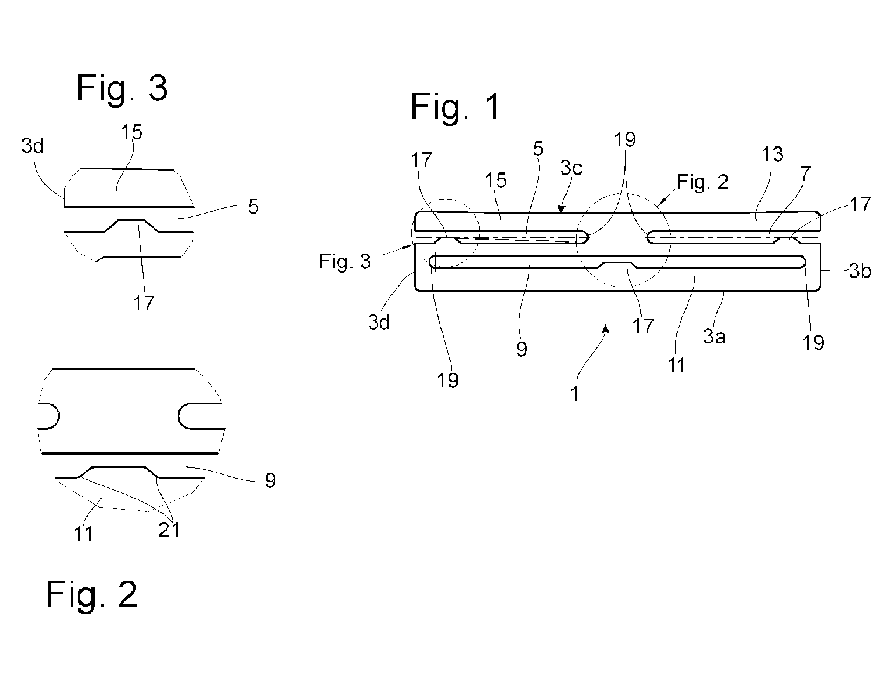

Die Fig. 1 zeigt ein Füllstück 1 einer an sich bekannten Scheibendichtung. Das Füllstück 1 besteht aus einem Kunststoff oder einem metallischen Werkstoff. Auf seinen äußeren Stirnflächen 3a - 3d wird ein nicht dargestellter Dichtungsrahmen verspannt. Parallel zu seinen Stirnflächen 3a; 3c ist mindestens ein Schlitz 5 - 9 ausgeführt, der mindestens einen elastischen Steg 11 - 15 begrenzt. In diesem Ausführungsbeispiel verlaufen die Schlitze 5 - 9 horizontal, doch sind auch ein vertikale Schlitze denkbar. Die Schlitze 5 - 9 sind hinsichtlich ihrer Schlitzbreiten u. a. auf eine lange Standzeit des erzeugenden Stanzwerkzeugs dimensioniert. Im Bereich des maximal möglichen Federwegs der elastischen Stege 11 - 15 dient ein Anschlag 17 als Wegbegrenzung für den jeweiligen Steg.

Der untere Schlitz 11, der sich nahezu über die gesamte Länge des Füllstücks 1 erstreckt, verfügt über einen im Mittenbereich ausgeführt Anschlag 17. Der Anschlag 17 wird von einem die Schlitzbreite verringernden Vorsprung gebildet. Beidseitig des Anschlags liegt bis auf endseitige Ausläufe 19 eine konstante Schlitzbreite vor.

Wie aus der Figur 2 ersichtlich ist, sind die Übergänge 21 des Schlitzes 9 im Bereich des Vorsprungs 17 ausgerundet, um eine eckenfreie Schneidengeometrie am Stanzwerkzeug erreichen zu können. Hinsichtlich der Schlitzgeometrie sind viel Formen denkbar. Neben einer konstanten Schlitzbreite mit mindestens einem Vorsprung 17 kann der Schlitz auch der Form einer mathematisch stetigen Funktion folgen, also ohne Ecken und Vorsprünge wie durch die gestrichelte Linie 23 dargestellt, z. B. trapezförmig verlaufen.

Die beiden oberen Schlitze 5; 7 verlaufen ausgehend von einem inneren Füllstückbereich 25 bis zu einem äußeren Rand und schneiden damit die Stirnflächen 3b; 3d. Der Anschlag 17 ist, wie die Fig. 3 vergrößert zeigt, radial in einem Abstand zu den Rändern bzw. Stirnflächen 3b; 3d nach innen in Richtung des Füllstückbereichs 25 versetzt ausgeführt. Es soll erreicht werden, dass der schwächste Stanzwerkzeugquerschnitt an einem Endpunkt liegt und damit besonders leicht ausbrechen könnte.

### Bezugszeichenliste

- 1: Füllstück
- 3a - -3d: Stirnflächen
- 5 - 9: Schlitze
- 11 - 1 5: Stege
- 17: Anschlag
- 21: Übergänge
- 23: gestrichelte Linie
- 25: innerer Füllstückbereich

## Patentansprüche

1. Scheibendichtung (1), umfassend ein Füllstück (3) mit mindestens einem Schlitzen (5; 7; 9), der mindestens einen elastischen Stege (5; 7; 9) begrenzt, wobei der elastische Steg (11; 13; 15) einen maximalen Federweg ausführen kann, der der Schlitzbreite entspricht,
**durch gekennzeichnet,**
dass der Schlitz (5; 7; 9) breiter als ein zulässiger Federweg des Stegs (5; 7; 9) ausgeführt ist und mindestens ein Anschlag als Wegbegrenzung für den elastischen Steg (5; 7; 9) dient.

2. Scheibendichtung nach Anspruch 1,
**dadurch gekennzeichnet,**
**dass** der Anschlag von mindestens einem die Schlitzbreite verringernden Vorsprung (17) gebildet wird.

3. Scheibendichtung nach Anspruch 2,
**dadurch gekennzeichnet,**
**dass** die Übergänge (21) des Schlitzes (5; 7; 9) zum Vorsprung (17) ausgerundet sind.

4. Scheibendichtung nach Anspruch 1,
**dadurch gekennzeichnet,**
**dass** der Schlitz (5; 7; 9) der Form einer mathematisch stetigen Funktion folgt.

5. Scheibendichtung nach Anspruch 4,
**dadurch gekennzeichnet,**
**dass** der Schlitz (5; 7; 9) trapezförmig verläuft.

6. Scheibendichtung nach den Ansprüchen 2 oder 4,
**dadurch gekennzeichnet,**
**dass** der Schlitz (5; 7) bis zu einem äußeren Rand verläuft und der Anschlag (17) in einem Abstand vom Rand nach radial innen versetzt ausgeführt ist.
